# EUROPÄISCHE PATENTANMELDUNG

(11) **EP 1 988 180 A1**
(43) Veröffentlichungstag der Anmeldung: **05.11.2008**
(21) Anmeldenummer: 07107561.8
(22) Anmeldetag: 04.05.2007
(51) Int. Cl.: C22B 7/04, C21B 3/06, C04B 5/00

(54) **Verfahren zur Herstellung von Steinmaterial aus Schlacke und Verwendung von derart hergestelltem Steinmaterial**

(71) Anmelder: ThyssenKrupp Steel AG, 47166 Duisburg (DE)
(72) Erfinder: Erdmann, Ronald, 44269 Dortmund (DE); Kesseler, Klaus, 44289 Dortmund (DE); Kühn, Michael, 26427 Neuharlingersiel (DE); Mudersbach, Dirk, 47638 Straelen (DE)
(74) Vertreter: Cohausz & Florack

(57) **Zusammenfassung**

Mit der Erfindung wird eine besonders wirtschaftliche Verwertung von bei der Roheisengewinnung entstehenden Schlacken ermöglicht, wobei das Roheisen insbesondere aus Hüttenreststoffen, wie Stahl- und Gichtstäuben, erzeugt wird. Zu diesem Zweck schlägt die Erfindung ein Verfahren zum Herstellen von Steinmaterial aus Schlacke, die bei der Gewinnung von Roheisen entsteht, vor, bei dem eine CaO₂/SiO₂-Basizität der Schlacke von < 0,65 eingestellt wird und bei dem die derart eingestellte Schlacke im fließfähigen Zustand in einen Kübel abgegossen und kontrolliert abgekühlt wird, so dass ein Steinmaterial erhalten wird, das bei einer Absplitterung SZ 8/12 von weniger als 25 Gew.-% und einer durchschnittlichen Druckfestigkeit von mindestens 150 N/mm² weniger als 3 % amorpher Bestandteile aufweist. Derart hergestelltes Steinmaterial lässt sich als Bausteine für Bauwerke verwenden, die aufgrund ihrer Eigenschaftskombination besonders für den Einsatz im Wasser geeignet sind.

## Beschreibung

Die Erfindung betrifft ein Verfahren zur Herstellung von Steinmaterial aus Schlacke, die bei der Gewinnung von Roheisen entsteht. Darüber hinaus betrifft die Erfindung Verwendungen von derart hergestelltem Steinmaterial.

Bei der Gewinnung, Aufbereitung, Vorbereitung und Verarbeitung von Erzen fallen eisenhaltige Stäube in großen Mengen an. Diese Stäube können für die Metallerzeugung genutzt werden, indem sie in eine stückige Form gebracht werden.

Übliche Verfahren für das Stückigmachen von im Bereich der Verhüttung eingesetzten Stäuben sind das Sintern und das Pelletieren. Das Sintern eignet sich dabei insbesondere für das Recycling von Reststoffen mit einer relativ groben Körnung, wogegen sich das Pelletieren insbesondere für die wirtschaftliche Wiederverwertung von feinen Stäuben nutzen lässt.

Beispiele für das Sintern von eisenhaltigen Stäuben sind in der DE 197 12 025 C1 und der DE 197 12 042 C1 gegeben, während sich in der DE 33 07 175 A1 oder der US 4,239,530 eine detaillierte Darstellung des Standes der Technik im Bereich der Pelletierung von metalloxidhaltigen feingekörnten Stäuben findet.

Ein weiteres Verfahren, in feinkörniger Form vorliegendes Eisenoxid für die Roheisenerzeugung zu nutzen, ist in dem von Michael Peters et al. verfassten Vortrag "Oxygen Cupola for recycling waste oxides from an integrated steel plant", am 17. Juni 2003 auf der 3^{rd} International Conference on Science and Technology of Steel Making METEC Congress 03 in Düsseldorf, Deutschland, vorgestellt worden. Mit diesem bekannten Verfahren, das auch unter der Bezeichnung "OxiCup-Verfahren" bekannt ist, ist es möglich, Eisenoxid-Rückstände, die als Rest- oder Kreislaufstoffe in Form von Filterstäuben bei der Roheisenproduktion in großen Mengen anfallen, mit großem wirtschaftlichen Nutzen als Recycling-Material in den Erschmelzungsprozess zurückzuführen.

Dazu werden beim OxiCup-Verfahren die in fein- bis feinstkörniger Form vorliegenden Rückstände (Eisenoxid-Stäube) der Eisenerzeugung mit einem Kohlenstoffträger, wie Koksgrus, mit Wasser und mit einem als Bindemittel wirkenden Zement vermischt. Aus der Mischung werden Blöcke geformt.

Nach dem Trocknen sind diese Blöcke so gut schütt- und fließfähig, dass sie problemlos in den zur Eisenerzeugung eingesetzten OxiCup-Ofen gegeben werden können. Dabei besitzen sie eine so große Formstabilität und Festigkeit, dass sie den im Ofen auftretenden Belastungen widerstehen können, denen sie aufgrund der auf ihnen lastenden, durch nachrückendes Material gebildeten Materialsäule ausgesetzt sind.

Beim Absinken von der hoch gelegenen Einfüllposition in Richtung der heißen Zone des OxiCup-Ofens werden die Blöcke auf eine über 1000 °C liegende Temperatur erwärmt.

Der in den Blöcken jeweils enthaltene Kohlenstoff-Träger wird dabei in CO-Gas umgewandelt, das eine direkte Reduktion des Eisenoxidanteils der Blöcke bewirkt. Der OxiCup-Prozess erlaubt so die wirtschaftliche und umweltschonende Wiederverwendung von bei der Eisenproduktion anfallenden Stäuben.

Die voranstehend beschriebenen Verfahren erlauben es, Roheisen aus Hüttenreststoffen zu gewinnen. Sowohl bei diesem Recycling-Prozess als auch bei der konventionellen hüttenmännischen Gewinnung von Roheisen werden jedoch auch große Mengen an Schlacke erzeugt. Aus diesen Schlacken werden üblicherweise Baumaterialien, wie Schotter und andere Schüttgüter, erzeugt, die bevorzugt im Straßenbau oder als Füllstoff verwendet werden.

Aus der JP 04-321538 A ist es in diesem Zusammenhang bekannt, dass sich aus einer Ca-, Si- und Na-haltigen Schlacke hochfeste Baumaterialien herstellen lassen, indem das CaO/SiO₂-Gewichtsverhältnis der Schlacke auf 0,3 - 1,8 und das Gewichtsverhältnis von Na₂O/CaO auf 0,2 - 4,0 eingestellt wird. Durch die Einstellung dieser Gewichtsverhältnisse wird erreicht, dass die beteiligten Metalle in Oxide umgewandelt werden. Die derart eingestellte Schlacke wird anschließend einer Schmelzenbehandlung unterzogen.

Des Weiteren ist es aus der JP 04-132642 A bekannt, dass die Kristallinität und mechanische Festigkeit einer Schlacke dadurch verbessert werden können, dass die jeweilige, eine optimierte Basizität aufweisende Schlacke, nachdem sie aus dem jeweiligen Ofen entnommen ist, im Bereich von 1.200 - 900 °C mit einer Abkühlgeschwindigkeit von maximal 10 °C/min gekühlt wird.

Ausgehend von dem voranstehend erläuterten Stand der Technik lag der Erfindung die Aufgabe zu Grunde, ein Verfahren anzugeben, das die wirtschaftliche Verwertung von bei der Roheisengewinnung entstehenden Schlacken erlaubt. Dabei sollte das erfindungsgemäße Verfahren insbesondere zur Verwertung von Schlacken geeignet sein, die beim Recycling von Hüttenrückständen zu Roheisen entstehen. Zusätzlich sollten vorteilhafte Verwendungen der jeweils verwerteten Schlacken angegeben werden.

In Bezug auf das Verfahren ist diese Aufgabe erfindungsgemäß durch die Lehre des Anspruchs 1 gelöst worden. Vorteilhafte Ausgestaltungen dieser Lehre sind in den auf Anspruch 1 rückbezogenen Ansprüchen angegeben.

Vorteilhafte erfindungsgemäße Verwendungen der derart genutzten Schlacken sind in Anspruch 11 und den darauf rückbezogenen Ansprüchen angegeben.

Die Erfindung basiert auf dem Gedanken, bei der Roheisenerzeugung entstehende Schlacke unter gezielt vorgegebenen Bedingungen in einen hochwertigen Baustoff zu überführen. Hierzu wird in der Schlacke eine definierte Basizität eingestellt und die Schlacke nach dem Abgießen definiert abgekühlt.

Besonders geeignet erweist sich das erfindungsgemäße Verfahren zur Verwertung von solchen Schlacken, die beim Recycling von Hüttenreststäuben, wie eisenhaltigen Stäuben, insbesondere Stahl- und Gichtstäuben, zu Roheisen entstehen. Berücksichtigt worden ist dabei, dass im Vergleich zur Roheisenherstellung im Hochofen beim Recycling von Hüttenreststoffen insbesondere in einem Schachtofen eine Schlacke entsteht, die sich - bedingt durch die unterschiedlichen Einsatzstoffe - in Zusammensetzung und Schmelzverhalten deutlich von der bei der Roheisenherstellung entstehenden Hochofenschlacke unterscheidet. Daher lassen sich die bekannten Verarbeitungs- und Nutzungswege der Hochofenschlacke auf die beim Recycling entstehende Schlacke nicht ohne Weiteres übertragen.

Gemäß der Erfindung wird dementsprechend die Schlacke, die bei der in einem Ofen erfolgenden Gewinnung von Roheisen aus Hüttenreststoffen, wie eisenhaltigen Stäuben, insbesondere Stahl- und Gichtstäuben, entsteht, zunächst gezielt so beeinflusst, dass sie eine CaO₂/SiO₂-Basizität von < 0,65 aufweist. Anschließend wird die so eingestellte Schlacke in ein geeignetes Gefäß abgeschüttet und darin kontrolliert abgekühlt.

Mit dem erfindungsgemäßen Verfahren lässt sich aus Schlacke, die beim Recycling von Hüttenreststoffen entsteht, ein marktfähiges kristallines Steinmaterial herstellen, das sich durch besonders gute Gebrauchseigenschaften auszeichnet und in dieser Hinsicht dem Naturmaterial Basalt oder Granit gleichkommt.

So weist erfindungsgemäß erzeugtes Steinmaterial eine durchschnittliche Druckfestigkeit von mindestens 150 N/mm², insbesondere 180 - 300 N/mm², auf. Bei der Prüfung des Widerstandes gegen Brechen zeigte erfindungsgemäß erzeugtes Steinmaterial im Mittel eine Druckfestigkeit von 279,5 MPa.

Gleichzeitig ist der im Schlagversuch an erfindungsgemäß erzeugtem Stein-Splitt gemäß DIN EN 1097-2, Abs. 6, ermittelte Absplitter-Wert SZ 8/12 auf weniger als 25 Gew.-% beschränkt. Erfindungsgemäß erzeugte Steinmaterialien sind demgemäß mit der qualitativ hochwertigsten Hochofenschlacke zu vergleichen.

Bemerkenswert ist die zuverlässige Reproduzierbarkeit der durch das erfindungsgemäße Verfahren erzielten Erfolge. So konnte anhand einer großen Zahl von Labor- und Betriebsversuchen gezeigt werden, dass der Zusammenhang zwischen der CaO/SiO₂-Basizität und der im Schlagversuch an Splitt ermittelten Festigkeit für alle Versuche gleich war.

Das erfindungsgemäße Verfahren eignet sich zur Verarbeitung von allen Schlacken, die bei der Roheisenerzeugung in Schachtöfen, Hochöfen, Kupolöfen etc. anfallen, wobei es besonders gute Ergebnisse bei der Verwertung von Schlacken zeigt, die beim Recycling von Hüttenreststoffen erzeugt werden.

Weiterhin hat sich gezeigt, dass das bei erfindungsgemäßer Einstellung einer niedrigen Basizität und der erfindungsgemäßen Wahl geeigneter kontrollierter Abkühlbedingungen erhaltene Material neben einem guten Absplitterungswert und einer hohen Druckfestigkeit weniger als 3 % amorphe Bestandteile aufweist. Aufgrund dieser Eigenschaftskombination besitzt erfindungsgemäß aus Schlacke erzeugtes Steinmaterial hervorragende Gebrauchseigenschaften, die es besonders geeignet für eine Verwendung als Baumaterial macht.

Ebenso wurde festgestellt, dass es für die Erzeugung des erfindungsgemäßen Steinmaterials neben der Einstellung einer niedrigen CaO/SiO₂-Basizität ausreicht, eine ausreichend langsame Abkühlung der Schlacke durchzuführen, um die gewünschte Eigenschaftskombination aus gutem Absplitterungsverhalten, hoher Festigkeit und geringem Anteil an amorphen Bestandteilen zu erzielen. Gemäß einer ersten Variante des erfindungsgemäßen Verfahrens werden die Abkühlbedingungen dementsprechend so gewählt, dass die Abkühlung auf Raumtemperatur bei Abkühlgeschwindigkeiten von weniger als 2 °C/min erfolgt. Die Abkühlung erfolgt in diesem Fall so langsam, dass ohne jede weitere Behandlung der Schlacke die Bildung von Glasanteilen im Steinmaterial auf ein Minimum reduziert ist. Um eine ausreichend langsame Abkühlung sicherzustellen, kann das Schlackenmaterial erforderlichenfalls abgedeckt abgekühlt werden.

Soll dagegen die Entstehung erfindungsgemäß beschaffenen Steinmaterials aus Schlacke beschleunigt werden, so kann dies dadurch ermöglicht werden, dass beim Abgießen der Schlacke in den Schlackenstrahl ein körniges Impfmittel gegeben wird. Die vorzugsweise feinkörnigen Körner des Impfmittels bilden in der Schlacke Kristallisationskeime, die im schmelzflüssigen Material das Kristallwachstum fördern. Es konnte gezeigt werden, dass bei erfindungsgemäßer Einstellung der Schlackenbasizität CaO/SiO₂ und Impfen des Schlackenstrahls beim Abgießen in eine Kokille mit einem Sand erhöhte Abkühlgeschwindigkeiten gewählt werden können, die bei unbehandelter Schlacke zu einer glasigen Erstarrung der gesamten Schlackenmenge geführt hätten.

Dementsprechend kann die nach dem Abgießen erfolgende kontrollierte Abkühlung im Fall einer in der voranstehend erläuterten Weise erfolgenden Impfung mit einer Abkühlgeschwindigkeit von 2 - 10 °C/min auf Raumtemperatur erfolgen.

Der Impfzusatz, bei dem es sich bevorzugt um kostengünstigen Quarzsand handelt, wirkt dabei optimal, wenn die Schlacke eine im Bereich der Solidus-Temperatur liegende Temperatur aufweist. Daher besteht eine vorteilhafte Ausgestaltung der Variante der Erfindung, bei der eine Impfung des Schlackenstrahls vorgenommen wird, darin, dass die Temperatur der Schlacke beim Abgießen allenfalls wenig höher ist als ihre Solidus-Temperatur. Bei Zugabe des Impfmittels in die in diesem Temperaturbereich erwärmte Schlacke bilden sich schlagartig Kristalle an den Impfkörnern.

Bedingt durch induzierte Wärmespannungen und der Kristallisation senkrecht zur Abkühlebene entstehen aus dem in erfindungsgemäßer Weise erzeugten Steinmaterial bei seiner Abkühlung selbstständig gut handhabbare Teilstücke. Erforderlichenfalls können diese in bekannter Weise mechanisch aufbereitet werden, um Material mit der jeweils gewünschten Körnung zur Verfügung zu stellen. Nach dem Brechen und Absieben steht ein hochwertiges Material zur Verfügung, das entweder in Gewichts- oder in Kornklassen vermarktet werden kann. Bei den Gewichtsklassen werden sowohl die Anforderungen gemäß LMB5/40 als auch die LMB10/60 (angegeben in DIN EN 13 383) erfüllt. Da nach der Zerkleinerung der Anteil gerundeter Steine klein ist, kann nach der Aufbereitung die in erfindungsgemäßer Weise zu Steinmaterial verwertete Schlacke der ebenfalls in der DIN EN 13 383 genormten Klasse R05 zugeordnet werden.

Von besonderer Bedeutung für die praktische Verwendbarkeit erfindungsgemäß erzeugten Steinmaterials ist auch, dass das Steinmaterial eine spezifische Dichte von mindestens 2,0 Mg/m³, insbesondere mindestens 2,5 Mg/m³ aufweist. So konnte nachgewiesen werden, dass die spezifische Dichte von erfindungsgemäß hergestelltem Steinmaterial regelmäßig im Bereich von 2,3 - 3,0 Mg/m³, insbesondere 2,8 - 3,0 Mg/m³, liegt.

Derart dichtes Material zeichnet sich durch eine besonders geringe Neigung zur Aufnahme von Wasser auf. So konnte gezeigt werden, dass erfindungsgemäßes Steinmaterial bei Kontakt mit Wasser nicht mehr als 0,5 Gew.-% aufnimmt. Dementsprechend ist bei Kontakt mit Wasser oder vergleichbaren Flüssigkeiten die Gefahr eines Ausspülens von eventuell schädlichen Bestandteilen des Steinmaterials in die Umgebung auf ein Minimum reduziert.

Letzteres konnte in Trogversuchen nachgewiesen werden, bei denen erfindungsgemäß erzeugtes Steinmaterial in Wasser getaucht wurde und die dabei ausgespülten Bestandteile im Eluat untersucht wurden. Es zeigte sich, dass die in Kontakt mit dem Steinmaterial entstandenen Eluate enthaltenen Mengen an hinsichtlich einer möglichen Umweltgefährdung und der Gebrauchseigenschaften kritischen Inhaltsstoffen deutlich unterhalb der Grenzwerte liegen, die für eine hinsichtlich ihres Einsatzes im Wasser ungefährlichen industriell hergestellten Gesteinen vorgeschrieben sind. So ergaben die an den Eluaten des erfindungsgemäß erzeugten Steinmaterials durchgeführten Tests, eine Algen-, Daphnien- und Fischtoxität, die ihren Einsatz in wässriger Umgebung ohne weiteres erlaubt. Auch hat sich erfindungsgemäßes Steinmaterial als unkritisch hinsichtlich einer möglichen Gefährdung von Säugetieren erwiesen.

Aufgrund seiner besonderen Eigenschaften ist erfindungsgemäß erzeugtes Steinmaterial besonders zur Verwendung im Baubereich geeignet. So lassen kann dieses Steinmaterial insbesondere als Bausteine für den Bau von Bauwerken genutzt werden.

Die ökotoxikologischen Eigenschaften in Kombination mit einer hohen Druckfestigkeit, einem guten Absplitterungswert und einer aufgrund seiner geringen Neigung zur Wasseraufnahme sehr guten Frost-Tau-Wechselbeständigkeit macht erfindungsgemäß erzeugtes Steinmaterial dabei besonders geeignet für eine Verwendung beim Bau von Bauwerken in einem stehenden oder strömenden Gewässer. So lassen sich aus erfindungsgemäß erzeugtem Steinmaterial beim Gewässerbau wasserdurchlässige Deckschichten, Kornfilter etc. herstellen, die beispielsweise bei der Befestigung einer Ufer- oder Dammböschung benötigt werden.

Insbesondere ist erfindungsgemäß erzeugtes Steinmaterial zum Bau von durchlässigen Auskleidungen eines Gewässers geeignet, die den ungehinderten Wasseraustausch zwischen Untergrund und Wasserstraße erlaubt. Sie besteht im allgemeinen aus einer Deckschicht und einem darunter liegenden Filter. Als Deckwerk wird dabei die flächenhafte Befestigung der Ufer- und Dammböschungen sowie der Sohle eines Gewässers bezeichnet. Auch Buhnen, Leitwerke etc. werden analog zu diesen flächenhaften Befestigungen hergestellt.

Zum Nachweis der Wirksamkeit der Erfindung wurde eine beim Recycling von eisenhaltigen Hüttenstäuben in einem Schachtofen nach dem OxiCup-Verfahren entstehende schmelzflüssige, eine graue Farbe aufweisende Schlacke, deren CaO/SiO₂-Basizität auf weniger als 0,65 eingestellt worden ist, in jeweils 5 - 20 Tonnen Schlacke fassende Kübel gegossen und über eine Dauer von vier Tagen bei einer unterhalb von 2 °C pro Minute liegenden Abkühlgeschwindigkeit auf Raumtemperatur abgekühlt. Dabei entstand im Wesentlichen vollständig kristallines Steinmaterial mit einem Glasanteil von weniger als 3 Gew.-%, das aufgrund der bei der Abkühlung induzierten Wärmespannungen und der Kristallisation bereits im Kübel bzw. beim Auskippen des fertig abgekühlten Materials in viele Bruchstücke zersprungen ist. Nach dem Abkippen erfolgte eine mechanische Aufbereitung des erhaltenen Steinmaterials, bei dem die zu großen Bruchstücke gebrochen und das erhaltene körnige Material nach Korn- oder Gewichtsklassen ausgesiebt worden ist.

Um festzustellen, ob die so erzeugten, im Durchmesser 80 - 400 mm großen Steine für eine Verwendung als Wasserbausteine geeignet sind, sind von dem Steinmaterial verschiedene Proben genommen worden. Die entnommenen, kompakt und massig ausgebildeten Gesteinsblöcke wiesen eine graue Farbe und bei unterschiedlichen Größen eine gedrungene, zum Teil längliche Form auf. Die Oberflächen der Steine waren durch das Brechen überwiegend rau. Risse und Mikrorisse waren ebenso wenig erkennbar wie oberflächliche Verwitterungen. Bei wenigen Steinen waren makroskopisch allenfalls kleine Poren und Hohlräume zu erkennen. Nach einer Trockensiebung zur Bestimmung der Steingrößenverteilung konnten keine Feinbestandteile an den Oberflächen der Wasserbausteine festgestellt werden.

Anschließend wurde nach DIN EN 13383-2, Abschnitt 7, geprüft, ob die Steinform der Wasserbausteine ein Verhältnis von Länge zu Dicke größer als 3 aufweisen. Die Messungen erfolgten analog der auf Abb. 6 der DIN EN 13383-2 dargestellten Versuchsanordnung. Insgesamt wurden dabei 7 x 200 Wasserbausteine mit einer Gesamtmasse von 23 t geprüft. Keiner der untersuchten Wasserbausteine wies ein Längen- zu Dickenverhältnis von größer 3 auf. Gemäß DIN EN 13383-1 war das untersuchte Material dementsprechend sowohl für die Größenklassen als auch für die leichten Gewichtsklassen hinsichtlich der Steinform in die Kategorie LT_{A} (Verhältnis von Länge zu Dicke < 20) einzuordnen.

Die Gesteinsdichte der untersuchten Wasserbausteine wurde gemäß DIN EN 13383-2, Abschnitt 8, bestimmt. Die Prüfung erfolgte an jeweils zehn Steinen. Die ermittelte Rohdichte für die Wasserbausteine betrug im Mittel 2,941 Mg/m³ bei Einzelwerten, die zwischen 2,907 Mg/m³ und 2,973 Mg/m³ lagen. Die Dichte der Wasserbausteine lag damit sicher oberhalb der in der TLW 2003 bzw. DIN V 20000-102 festgelegten Mindestgrenze von 2,3 Mg/m³.

Die Prüfung der Wasseraufnahme wurde gemäß DIN EN 13383-2, Abschnitt 8, durchgeführt. Das Ergebnis der Prüfung von jeweils zehn der untersuchten Wasserbausteine ist exemplarisch in Tabelle 1 angegeben. Die untersuchten Wasserbausteine wiesen demnach im Durchschnitt eine unterhalb von 0,5 Masse-% liegende Wasseraufnahme auf und waren somit in die durch die TLW 2003 bzw. DIN V 20000-102 geforderte Kategorie für die Wasseraufnahme WA_{0,5} einzuordnen. Damit waren die Wasserbausteine als frosttau-wechsel-beständig anzusehen. Eine ergänzend durchgeführte Untersuchung der Frost-Tau-Wechselbeständigkeit nach DIN EN 13383-2, Abschnitt 9, ergab eine Einteilung in die Kategorie FT_{A} mit 0 % Absplitterung jeweils bei allen zehn untersuchten Gesteinsstücken.

Des Weiteren wurde der Widerstand der untersuchten Wasserbausteine gegen Brechen durch Prüfung der Druckfestigkeit nach EN 1926, Anhang A, bestimmt. Gemäß TLW 2003 war dabei als Regelanforderung beim Widerstand gegen Brechen die Kategorie CS₈₀ einzuhalten. Gemäß DIN EN 13383-1 musste zudem der Mittelwert der Druckfestigkeit von neun Messproben, bei Aussortierung des niedrigsten Wertes von 10 Proben, mehr als 80 MPa betragen. Dabei durfte die Druckfestigkeit von nicht mehr als 2 der 10 Messproben kleiner 60 MPa sein.

Die Druckfestigkeit wurde gemäß DIN EN 1926 nach einer vierundzwanzigstündigen Wasserlagerung bestimmt. Aus den Gesteinsproben wurden jeweils zehn zylindrische, jeweils 50 mm hohe und im Durchmesser 48 mm messende Probenkörper herausgebohrt. Die Ergebnisse der an diesen Proben durchgeführten Druckfestigkeitsmessung sind in Tabelle 2 beispielhaft zusammengefasst. Bei der Mittelwertbildung wurde die für die Probe 3 ermittelte Druckfestigkeit nicht berücksichtigt. Das entsprechende Messergebnis ist in Tabelle 2 durch "*)" gekennzeichnet.

Die Wasserbausteine wiesen im Mittel eine Druckfestigkeit von 283,6 MPa auf. Kein Stein hat eine Druckfestigkeit von weniger als 60 MPa. Damit erfüllten sie die in DIN EN 13383-1 an Steine der Kategorie CS₈₀ gestellten Anforderungen. Die Anforderungen der TLW 2003 bzw. DIN V 20000-102 wurden ebenfalls erfüllt.

Zusätzlich zu der Ermittlung der mechanischen und geometrischen Eigenschaften der untersuchten Wassersteine sind deren Eigenschaften im Hinblick auf eine wasserwirtschaftliche Verwendung geprüft worden.

Dabei ist zunächst eine Auslaugung der Wassersteine im Trog-Verfahren in Anlehnung an die DIN EN 1744-3 durchgeführt worden. Das dabei gewonnene Trog-Eluat ist hinsichtlich seines pH-Wertes, seiner elektrischen Leitfähigkeit sowie seines Cr- und Cu-Gehaltes untersucht worden. Die Untersuchungsergebnisse sind in der zweiten Spalte der Tabelle 3 zusammengefasst. Zum Vergleich sind in diese Tabelle zusätzlich die gemäß den derzeit geltenden technischen Lieferbedingungen für aus LD-(Spalte "LD"), Elektroofen- (Spalte "EO") und Cu-Schlacke (Spalte "CU") hergestellte Wasserbausteine einzuhaltenden Grenzwerte eingetragen.

Der Vergleich der Ergebnisse der Untersuchung der wasserwirtschaftlichen Verträglichkeit der Eluate, die für die erfindungsgemäß erzeugten Proben im Trog ermittelt worden sind, mit den Anforderungen der TLW für industriell hergestellte Wasserbausteine (Tabelle 1, Spalten 3-5) zeigt, dass die erfindungsgemäßen Wasserbausteine alle Anforderungen sicher erfüllen, die für in Wasser unbedenklich verarbeitbare, aus anderen Schlacken hergestellte Steine gefordert werden. Sie besitzen dementsprechend eine besonders gute wasserwirtschaftliche Verträglichkeit und eignen sich daher als gut umweltverträgliche Wasserbausteine.

Ergänzend durchgeführte Untersuchungen haben in diesem Zusammenhang belegt, dass die in erfindungsgemäßer Weise aus Schachtofenschlacke gewonnenen Wasserbausteine neben den vier in Tabelle 3 aufgeführten Parametern auch andere Bestandteile in nur äußerst geringen Konzentrationen auslaugen. Diese Untersuchungen haben bestätigt, dass die aus Schachtofenschlacke gewonnenen Steine hinsichtlich ihrer mechanischen Eigenschaften und ihrer Umweltverträglichkeit vergleichbar sind mit natürlichen vulkanischen Gesteinen, wie Granit oder Basalt.

**Tabelle 1**

| Gewicht vor der Wasserlagerung | Gewicht nach der Wasserlagerung | Wasseraufnahme | Wasseraufnahme |
|---|---|---|---|
| [g] | [g] | [g] | [Masse-%] |
| 355,05 | 357,02 | 1,97 | 0,55 |
| 350,28 | 350,52 | 0,24 | 0,07 |
| 335,18 | 336,55 | 1,37 | 0,41 |
| 354,59 | 355,70 | 1,11 | 0,31 |
| 350,21 | 351,22 | 1,01 | 0,29 |
| 360,58 | 361,83 | 1,25 | 0,35 |
| 321,85 | 323,36 | 1,51 | 0,47 |
| 385,58 | 387,64 | 2,06 | 0,53 |
| 320,81 | 322,75 | 1,94 | 0,60 |
| 335,62 | 336,25 | 0,63 | 0,19 |
| | | Min.: | 0,07 |
| | | Max.: | 0,60 |
| | | Mittelwert: | 0,38 |

**Tabelle 2**

| Proben-Nummer | Bruchlast kN | Druckfestigkeit MPa |
|---|---|---|
| 1 | 486,0 | 268,6 |
| 2 | 500,5 | 276,6 |
| 3 | 462,8 | 255,8*) |
| 4 | 508,2 | 280,8 |
| 5 | 472,5 | 261,1 |
| 6 | 515,2 | 284,7 |
| 7 | 523,8 | 289,5 |
| 8 | 534,7 | 295,5 |
| 9 | 542,6 | 299,9 |
| 10 | 535,2 | 295,8 |
| Mittelwert aus neun Proben: | | 283,6 |

**Tabelle 3 (n. r. = nicht relevant)**

| Parameter | Einheit | Erfindungsgemäße | Anforderungen gemäß TLW für Schlacken | | |
|---|---|---|---|---|---|
| | | Wasserbausteine | LD | EO | CU |
| pH-Wert | | 7,5 | < 11,5 | < 11,0 | n. r. |
| elek. Leitf. | [µS/cm] | 15 | < 100 | < 80 | n. r. |
| Cr | [mg/l] | < 0,01 | < 0,02 | < 0,03 | n. r. |
| Cu | [mg/l] | < 0,01 | n. r. | n. r. | < 0,05 |

## Patentansprüche

1. Verfahren zur Herstellung von Steinmaterial aus Schlacke, die bei der Gewinnung von Roheisen entsteht, **dadurch gekennzeichnet, dass**
- eine CaO₂/SiO₂-Basizität der Schlacke von < 0,65 eingestellt wird und
- die derart eingestellte Schlacke im fließfähigen Zustand in einen Kübel abgegossen und kontrolliert abgekühlt wird,
- so dass ein Steinmaterial erhalten wird, das bei einer Absplitterung SZ 8/12 von weniger als 25 Gew.-% und einer durchschnittlichen Druckfestigkeit von mindestens 150 N/mm² weniger als 3 % amorpher Bestandteile aufweist.

2. Verfahren nach Anspruch 1, **dadurch gekennzeichnet, dass** das Roheisen aus Hüttenreststoffen, wie eisenhaltigen Stäuben, insbesondere Stahl- und Gichtstäuben, erzeugt wird.

3. Verfahren nach einem der voranstehenden Ansprüche, **dadurch gekennzeichnet**, d a s s als Ofen zur Roheisengewinnung ein Schachtofen eingesetzt wird.

4. Verfahren nach einem der voranstehenden Ansprüche, **dadurch gekennzeichnet, dass** die Druckfestigkeit des Steinmaterials mindestens 180 N/mm² beträgt.

5. Verfahren nach einem der voranstehenden Ansprüche, **dadurch gekennzeichnet, dass** die Schlacke nach dem Abgießen mit einer Abkühlgeschwindigkeit von weniger als 2 °C/min auf Raumtemperatur abgekühlt wird.

6. Verfahren nach einem der voranstehenden Ansprüche, **dadurch gekennzeichnet, dass** beim Abgießen der Schlacke in den Schlackenstrahl ein körniges Impfmittel gegeben wird.

7. Verfahren nach Anspruch 6, **dadurch gekennzeichnet, dass** das Impfmittel feinkörnig ist.

8. Verfahren nach Anspruch 7, **dadurch gekennzeichnet, dass** das Impfmittel ein Sand, insbesondere ein Quarzsand, ist.

9. Verfahren nach einem der Ansprüche 5 bis 8, **dadurch gekennzeichnet, dass** die geimpfte Schlacke nach dem Abgießen mit einer Abkühlgeschwindigkeit von 2 - 10 °C/min auf Raumtemperatur abgekühlt wird.

10. Verfahren nach einem der voranstehenden Ansprüche, **dadurch gekennzeichnet, dass** das Steinmaterial eine spezifische Dichte von mindestens 2,0 Mg/m³, insbesondere mindestens 2,5 Mg/m³, aufweist.

11. Verwendung von gemäß einem der Ansprüche 1 bis 10 erzeugtem Steinmaterial als Bausteine beim Bau von Bauwerken.

12. Verwendung nach Anspruch 11, **dadurch gekennzeichnet, dass** die Bauwerke in einem stehenden oder strömenden Gewässer stehen.

13. Verwendung nach Anspruch 12, **dadurch gekennzeichnet, dass** aus dem Steinmaterial wasserdurchlässige Deckschichten hergestellt werden.

14. Verwendung nach Anspruch 12, **dadurch gekennzeichnet, dass** aus dem Steinmaterial Kornfilter hergestellt werden.

15. Verwendung nach einem der Ansprüche 12 bis 14, **dadurch gekennzeichnet, dass** es sich bei den Bauwerken um die Befestigung einer Ufer- oder Dammböschung handelt.
